# EUROPÄISCHE PATENTSCHRIFT

(11) **EP 3 957 372 B1**
(45) Veröffentlichungstag und Bekanntmachung des Hinweises auf die Patenterteilung: **18.10.2023**
(21) Anmeldenummer: 21191910.5
(22) Anmeldetag: 18.08.2021
(51) Int. Cl.: A62C 3/16, H02G 3/04, H02G 3/32

(54) **KABELANLAGE MIT FUNKTIONSERHALT IM BRANDFALL**
CABLE INSTALLATION WHICH REMAINS FUNCTIONAL IN THE EVENT OF FIRE
INSTALLATION DE CÂBLAGE APTE À FONCTIONNER EN CAS D'INCENDIE

(30) Priorität: 20.08.2020 DE 202020104836 U
(43) Veröffentlichungstag der Anmeldung: 23.02.2022
(73) Patentinhaber: OBO Bettermann Produktion Deutschland GmbH & Co.KG, 58710 Menden (DE)
(72) Erfinder: FABRY, Hans-Theo, 58710 Menden (DE)
(74) Vertreter: Haverkamp Patentanwälte PartG mbB

(56) Entgegenhaltungen:
- EP-A1- 3 139 459
- DE-U1- 9 104 959
- DE-U1- 20 304 279
- KR-B1- 101 763 857
- US-A- 4 433 732
- "fUNKTIONSERHALT- Umfassende Sicherheitstechnik vom Profi", , 1. April 2015 (2015-04-01), XP055252285, Gefunden im Internet: URL:http://www.cabling.datwyler.com/filead min/mediapool/userfiles/download/safety_ot her/SafetyBroschuere_ch_0415.pdf [gefunden am 2016-02-22]

## Beschreibung

Die Erfindung betrifft eine Kabelanlage mit Funktionserhalt im Brandfall, umfassend eine Steigeleiter für den vertikalen oder geneigten Einsatz mit zwei durch Sprossen miteinander verbundenen Leiterprofilen und an den Sprossen mittels Klemmbefestigern gehaltenen Kabeln, wobei zumindest eine Klemmbefestiger tragende Sprosse der Steigeleiter mit ihren Klemmbefestigern durch einen feuerbeständigen, wärmeisolierenden Aufsatz gegenüber der äußeren Umgebung im Brandfalle isoliert sind, welcher Aufsatz ein aus feuerfestem bzw. feuerbeständigem Material hergestelltes erstes Gehäuseteil mit einer Vorderwand und mit zwei Seitenwänden sowie eine feuerfeste Gehäusefüllung zum Auskleiden des Gehäuseteilhohlraums aufweist.

Kabelanlagen sind Kabelführungssysteme an bzw. in denen Kabel geführt sind. Für den vertikalen oder geneigten Verlauf werden Steigeleitern eingesetzt. Die verfügen über zwei Leiterprofile, die durch Sprossen miteinander verbunden sind. Die Sprossen dienen als Befestigungsgrund für Befestigungsmittel, typischerweise Klemmbefestiger, etwa Klemmschellen, mit denen die entlang der Steigeleiter geführten Kabel gehalten werden. Bei Kabelanlagen ist es erforderlich, für einen Funktionserhalt im Brandfall, zumindest für eine gewisse Zeitspanne zu sorgen. Bei an Steigeleitern angeschlossenen Kabeln können diese aufgrund ihres Gewichtes und infolge eines durch die Temperatureinwirkung bedingten Erweichens der Isolierung durch die üblicherweise verwendeten Klemmbefestiger im Brandfalle für die benötigte Zeitdauer nicht gehalten werden. Um dennoch die geforderte Funktion bei an Steigeleitern verlegten Kabeln zu gewährleisten, ist in EP 3 453 914 A1 eine Klemmbefestigung für an einer Steigeleiter verlegte Flachkabel beschrieben, die sich im Brandfalle selbsttätig nachstellt. Werden jedoch die ansonsten üblichen Klemmbefestiger verwendet, sind Unterstützungsmaßnahmen erforderlich, um den vorgeschriebenen Funktionserhalt zu gewährleisten. Hierzu werden die Klemmbefestiger und damit die von diesen gehaltenen Kabeln gegenüber der Wärmeeinwirkung eines Brandes geschützt, mithin die Klemmanordnung gegenüber der Umgebung diesbezüglich wärmeisoliert. Es wird als ausreichend angesehen, wenn derartige Unterstützungsmaßnahmen in einem gewissen Abstand in Längserstreckung der Steigeleiter und nicht an jeder Klemmbefestiger tragenden Sprosse vorgenommen werden. Zur Wärmeisolierung und damit zum Funktionserhalt über eine gewisse Zeitspanne wird ein feuerbeständiger, wärmeisolierender Aufsatz verwendet. Im Rahmen dieser Ausführungen ist ein Aufsatz dann als feuerbeständig anzusprechen, wenn dieser den Anforderungen an den Funktionserhalt bei derartigen Kabelanlagen erfüllt. Ein solcher Aufsatz verfügt über ein Gehäuseteil, welches in einer Draufsicht von oben U-förmig ausgeführt ist und eine Vorderwand sowie zwei Seitenwände aufweist. Die Vorderwand ist mit Abstand zu der ebenen Erstreckung der Steigeleiter angeordnet und stützt sich mit seinen beiden Seitenwänden an derjenigen Wand ab, an der die Steigeleiter montiert ist. Das Gehäuseteil fasst eine Sprosse mit ihren Klemmbefestigern ein. Das Gehäuseteil ist bezüglich seiner Wände typischerweise aus feuerfestem bzw. feuerbeständigem Material hergestellt. Das Gehäuseinnere ist mit einer feuerfesten Füllung aus Mineralfaserplatten ausgekleidet, durch die die Kabel und die Klemmbefestiger umschlossen sind. Derartige Aufsätze haben sich bewährt.

Aus US 4 433 732 ist ein Brandschutzsystem zum Ausrüsten von horizontal verlaufenden Kabelrinnen bekannt. Die in diesem Dokument beschriebenen Kabelrinnen sind als Kabelleiter ausgeführt. Der Brandschutz wird durch eine Einkofferung der Kabelrinne herbeigeführt. Hierzu wird ein hutförmig profiliertes Unterteil und ein Deckelteil verwendet. Beide Teile bestehen aus einer feuerbeständigen Schicht mit einem außenseitig angeordneten Drahtnetz und einer das Drahtnetz wiederum außenseitig kaschierenden Aluminiumfolie. Getragen wird diese Schicht von einem galvanisierten, die entsprechende Form aufweisenden Stahlblech. Zusammengehalten werden das hutförmig profilierte Bodenteil und das Deckelteil durch C-förmig profilierte, der Längserstreckung folgende Verbinder, die genauso aufgebaut sind wie das Unterteil und das Deckelteil. Aufgenommen in den C-förmigen Verbindern sind der abgewinkelte Flansch des Unterteils und der Randbereich des Deckelteils. Eine die Aufnahme der C-förmigen Verbinder durchgreifende Schraube hält den Verbund zusammen. In dem durch das Unterteil und das Deckelteil eingeschlossenen Hohlraum befindet sich die Kabelrinne. Auf den Sprossen der Kabelleiter liegen die Kabel auf. Die vorstehend zu vertikal oder geneigt beschriebenen Steigeleitern beschriebene Problematik im Brandfalle stellt sich bei der Kabelrinne dieses Standes der Technik nicht.

Eine Kabelinstallationsvorrichtung mit Funktionserhalt im Brandfall ist aus EP 3 139 459 A1 bekannt. Der für den Funktionserhalt im Brandfall dienende Aufsatz ist aus wärmefesten Elementen hergestellt. Der Aufsatz umfasst einen Profilrahmen, der eine wandseitig festgelegte Sprosse in der Ebene der Wandoberfläche einfasst. An dieses Rahmenprofil werden Seitenwände und eine Vorderwand angeschlossen. Zwei obere und zwei untere Gehäuseelemente stellen die Durchgangsöffnungen für die an der Sprosse festgelegten Kabel bereit. In jedes der beiden Elemente ist eine Halbbohrung eingebracht, so dass die beiden montierten Deckel- bzw. Bodenteile eine geschlossene Durchgangsöffnung für ein Kabel bereitstellen. Nachteilig ist bei diesem Konzept, dass nicht nur der jeweilige Durchmesser des an einer Sprosse zu haltenden Kabels zum Anfertigen der Deckel- und Bodenteile bekannt sein muss, sondern auch ihre Position an der Sprosse.

Mitunter besteht der Wunsch, derartige Steigeleitern auch freistehend bzw. freihängend zu montieren. Dann kann jedoch ein solcher Aufsatz als Unterstützungsmaßnahme für den Funktionserhalt der Kabelanlage im Brandfall nicht verwendet werden, da die gebäudeseitige Wand fehlt, an der das Gehäuseteil des Aufsatzes für den Funktionserhalt festgelegt wird. Überdies soll der Funktionserhalt im Brandfall verbessert werden.

Ausgehend von diesem Stand der Technik liegt der Erfindung die Aufgabe zugrunde, eine Kabelanlage mit Funktionserhalt im Brandfall umfassend eine Steigeleiter für den vertikalen oder geneigten Einsatz dergestalt weiterzubilden, dass diese auch freistehend oder freihängend eingesetzt werden kann und dass der Funktionserhalt auch bei einer wandseitig montierten Steigeleiter verbessert ist.

Gelöst wird diese Aufgabe zum einen erfindungsgemäß durch eine eingangs genannte, gattungsgemäße Kabelanlage, bei der der Aufsatz ein zweites Gehäuseteil in Form einer Rückenplatte zum rückseitigen Verschließen des ersten Gehäuseteils, deren Breite zumindest der Spannweite der Seitenwände zum Bereitstellen einer Abstützfläche für die Stirnflächen der Seitenwände entspricht, sowie im Bereich des seitlichen Randbereiches der Rückenplatte außenseitig zu dieser angeordnete Spannplatten und ferner Befestiger zum Anschließen der Rückenplatte an die Steigeleiter sowie Befestigungsmittel zum Anschließen des Gehäuseteils an die Steigeleiter zum Halten desselben mit den auf der Vorderseite der Rückenplatte abgestützten Stirnflächen seiner Seitenwände umfasst, so dass beide Gehäuseteile an der Steigeleiter abgestützt sind.

Gelöst wird diese Aufgabe zum anderen erfindungsgemäß durch eine eingangs genannte, gattungsgemäße Kabelanlage, bei der der Aufsatz ein zweites Gehäuseteil mit einer Rückwand und zwei Seitenwänden zum rückseitigen Verschließen des ersten Gehäuseteils, wobei die Spannweite des ersten und zweiten Gehäuseteils bezüglich des Abstandes ihrer Seitenwände gleich oder im Wesentlichen gleich ist, sowie ein an jedes Leiterprofil angeschlossenes, in Querrichtung nach außen davon abragendes Stützprofil für die Anlage der Stirnflächen der Seitenwände der beiden Gehäuseteile und ferner Befestiger zum Anschließen der beiden Gehäuseteile an die Steigeleiter zum Halten derselben mit den auf den Stützprofilen abgestützten Stirnflächen der Seitenwände der Gehäuseteile umfasst.

Eine solche Kabelanlage umfasst als Unterstützungsmaßnahme für den Funktionserhalt im Brandfall an entsprechenden Stellen mit Abstand zueinander einen wärmeisolierenden Aufsatz. Dieser verfügt neben dem an sich bekannten Gehäuseteil - einem ersten Gehäuseteil - über ein zweites Gehäuseteil, mit dem das erste Gehäuseteil rückseitig verschlossen ist. Die Breite des zweiten Gehäuseteils entspricht der Spannweite der Seitenwände des ersten Gehäuseteils. Beide Gehäuseteile sind an die Steigeleiter angeschlossen und an dieser abgestützt. Auf diese Weise ist durch den Aufsatz eine Sprosse mit dem daran mittels Klemmbefestigern gehaltenen Kabel gekapselt. Daher kann bei einer solchen Kabelanlage die Steigeleiter auch freistehend oder hängend verbaut werden. Auch bei einem Anschluss der Steigeleiter an eine Wand ist durch das zweite Gehäuseteil der Funktionserhalt durch das zweite Gehäuseteil und die damit erfolgte Kapselung typischerweise einer Sprosse mit ihren Klemmbefestigern verbessert.

In einer bevorzugten Ausgestaltung ist vorgesehen, dass das zweite Gehäuseteil an den Leiterprofilen der Steigeleiter mit Schraubbefestigern festgelegt ist. Eine Festlegung an den Leiterprofilen ist aufgrund der typischen Lochung der Leiterprofile zweckmäßig, da durch diese eine individuelle Anpassung der Anbringung hinsichtlich der Längserstreckung der Steigeleiter möglich ist. Da auch die Sprossen über eine solche Lochung an die Leiterprofile angeschlossen sind, ist ein definierter Anschluss des zweiten Gehäuseteils an die Steigeleiter in Bezug auf die von diesem mit einzufassende Sprosse definiert. Durch die typischerweise mehreren Schraubbefestiger ist das zweite Gehäuseteil an der Steigeleiter festgelegt. Auf den Gewindeschaft ist eine Spannmutter, zweckmäßigerweise unter Zwischenschaltung einer Beilagscheibe aufgeschraubt. Diese wirkt als Widerlager für das bezüglich des zweiten Gehäuseteils außenseitige Spannwiderlager, beispielsweise der Schraubenkopf eines solchen Schraubbefestigers oder für den Fall, dass es sich bei dem Schraubbefestiger um eine Gewindestange handelt, um eine zweite Spannmutter.

Besonders bevorzugt ist eine Ausgestaltung, bei der auch das erste Gehäuseteil mit oder zumindest unter Verwendung dieser Schraubbefestiger, mit denen das zweite Gehäuseteil an der Steigeleiter festgelegt ist, an die Steigeleiter angeschlossen ist. Dieses lässt sich dadurch realisieren, dass die zum Anschließen des zweiten Gehäuseteils an die Steigeleiter eingesetzten Schraubbefestiger einen entsprechend langen Gewindeschaft aufweisen, damit dieser durch die Vorderwand des ersten Gehäuseteils hindurch geführt werden kann, um dann das erste Gehäuseteil auf diesem Gewindeschaft mit einer außenseitigen Spannmutter zu halten. In einer anderen Ausgestaltung ist vorgesehen, zur Befestigung des zweiten Gehäuseteils Schraubbefestiger mit einem kürzeren Gewindeschaft zu verwenden, der ausreicht, um dieses an die Steigeleiter mit einer an ein Leiterprofil der Steigeleiter abgestützten Spannmutter anzuschließen und noch ein hinreichender Gewindeabschnitt vorhanden ist, um darauf eine Verbindungsmuffe aufzuschrauben. Diese Verbindungsmuffe dient zum Anschluss einer Gewindestange zur Verlängerung des Gewindeschaftes dieses Schraubbefestigers, die sodann mit einem Abschnitt aus der Vorderwand des ersten Gehäuseteils herausgeführt und das Gehäuseteil mit einer darauf aufgeschraubten Spannmutter hält. Möglich ist es auch, anstelle einer Gewindestange die Verbindungsmuffe zu nutzen, um darin den Gewindeschaft eines zweiten Schraubbefestigers festzulegen, der mit seiner Kopfunterseite gegen die Außenseite der Vorderwand des ersten Gehäuseteils wirkt.

Vorzugsweise wird auf den durch das erste Gehäuseteil geführten Gewindeabschnitt ein Anschlagmittel angebracht oder es befindet sich bereits vorgefertigt ein Anschlagmittel an entsprechender Stelle auf bzw. an der jeweiligen Gewindestange, gegen das die Innenseite der Vorderwand des ersten Gehäuseteils wirkt. Die durch die außenseitige Spannmutter einwirkende Spannkraft wirkt dann gegen dieses Widerlager mit dem Vorteil, dass die Spannkraft nicht insgesamt über die Seitenwände und deren Abstützung abgeleitet wird.

Diese Gehäuseteilbefestigung ist für beide Lösungsvorschläge geeignet.

Gemäß dem ersten Lösungsvorschlag ist das zweite Gehäuseteil in Form einer Rückenplatte ausgeführt. Durch die vorgesehene Breite derselben wird durch den seitlichen Randbereich der Vorderseite der Rückenplatte jeweils eine Abstützfläche für die Stirnflächen der Seitenwände des ersten Gehäuseteils bereitgestellt. Diese Rückenplatte ist, wie vorstehend erläutert, an die Steigeleiter mechanisch angeschlossen. Zu diesem Zweck sind unterstützend dem Aufsatz zwei außenseitig zur Rückwand der Rückenplatte angeordnete Spannplatten zugeordnet, die sich jeweils im seitlichen Randbereich der Rückenplatte befinden. Durch die Spannplatten wird dieser seitliche Randbereich der Rückenplatte gegenüber den Spannkräften versteift. Die Befestigungsmittel, mit denen die Rückenplatte an der Steigeleiter befestigt ist, durchgreifen die Spannplatten, sodass eine darauf einwirkende Spannkraft über die Fläche der Spannplatten in die Rückenplatte eingeleitet wird und nicht die Gefahr besteht, dass die aus feuerbeständigem Material, das typischerweise bruchempfindlich ist, hergestellte Rückenplatte beschädigt wird. Die sich typischerweise über die Höhe der Rückenplatte erstreckenden Spannplatten dienen zum einen zur Kraftverteilung des Befestigungsmittels zum Anschließen der Rückenplatte an die Steigeleiter und zum anderen zur Aufnahme von auf die Vorderseite bei einem Anschluss des ersten Gehäuseteils wirkenden Kräfte durch die Abstützung der Stirnflächen der Seitenwände. Das Gehäuseteil ist ebenso wie die Rückenplatte an die Steigeleiter angeschlossen. Das Gewicht des Gehäuseteils sowie der Gehäusefüllung wird somit in die Steigeleiter eingeleitet. Gleiches gilt für die Rückenplatte.

Zum Erleichtern einer Montage können die Spannplatten zumindest einen oberen, aus seiner Ebene abgekanteten Halteschenkel aufweisen, der den oberen Abschluss der Rückenplatte übergreift. Dies erleichtert die Montage, da dann die Spannplatte mit ihrem Halteschenkel den oberen Abschluss der Rückenplatte übergreifend aufgehängt gehandhabt werden kann. In einer Weiterbildung einer solchen Spannplatte ist vorgesehen, dass diese auch unterseitig einen aus der Ebene abgekanteten Halteschenkel aufweist. Durch die beiden Halteschenkel sind sodann der obere Abschluss sowie der untere Abschluss der Rückenplatte eingefasst, wobei der Abstand der Schenkel auf die diesbezügliche Höhe der Rückenplatte angepasst ist. Bei einer solchen Ausgestaltung kann eine solche Spannplatte auf die Rückseite der Rückenplatte aufgesetzt und durch Reibschluss an dieser gehalten sein. Für die Montage ist dann nur die Rückenplatte mit ihren beiden rückseitig daran vorfixierten Spannplatten zu handhaben.

Die Spannplatten können zwei individuelle Teile sein. Durchaus möglich ist es auch, die beiden Spannplatten als gegenständliche Einheit zu konzipieren, indem diese durch eine Brücke miteinander verbunden sind. Die Stanzplatten sind typischerweise Stanzbiegeteile, hergestellt aus einer Stahlplatine, sodass im Falle des Vorsehens einer die Spannplatten verbindenden Brücke zur Ausbildung eines solchen Bauteils keine zusätzlichen Teile oder Herstellschritte benötigt werden.

In einer Ausgestaltung gemäß dem zweiten Lösungsvorschlag ist das zweite Gehäuseteil ebenso wie das erste Gehäuseteil in einer Draufsicht von oben U-förmig ausgelegt und verfügt über eine Rückwand und zwei Seitenwände. Einen solchen Aufsatz für den Funktionserhalt einer Kabelanlage wird man dann einsetzen, wenn die Steigeleiter bzw. ihre Sprossen beidseitig mit Kabeln belegt sind. Somit wird bei dieser Ausgestaltung des zweiten Gehäuseteils ein weiterer, gegenüber der Umgebung im Brandfalle wärmeisolierter Montagehohlraum bereitgestellt. Bei einer solchen Ausgestaltung des Aufsatzes tragen die Leiterprofile der Steigeleiter jeweils typischerweise ein nach außen abragendes Stützprofil für die Anlage der Stirnflächen der Seitenwände der beiden Gehäuseteile. Typischerweise sind die Stützprofile gegenüber einem Verkippen in Richtung zu dem einen oder anderen Gehäuseteil hin abgestützt, damit die Stützprofile ein Widerlager bereitstellen, gegen das die Gehäuseteile verspannt werden können. Ebenso wie bei der zuvor beschriebenen Ausgestaltung, bei der als zweites Gehäuseteil eine Rückenplatte vorgesehen ist, ist auch bei einem Aufsatz mit zwei in der Draufsicht U-förmigen Gehäuseteilen vorgesehen, diese an der Steigeleiter zu befestigen, wie dieses bereits vorstehend beschrieben ist. Es versteht sich, dass bei einem solchen Aufsatz der aus den beiden Gehäuseteilen gebildete Gehäuseinnenraum mit einer feuerbeständigen Füllung ausgefüllt wird bzw. ist.

Nachstehend ist die Erfindung anhand von Ausführungsbeispielen unter Bezugnahme auf die beigefügten Figuren beschrieben. Es zeigen:
- **Fig. 1:**: Eine Kabelanlage gemäß einer ersten Ausgestaltung der Erfindung mit einer freistehenden Steigeleiter, ausgerüstet mit einem feuerbeständigen Aufsatz zum Funktionserhalt im Brandfall,
- **Fig. 2:**: die Steigeleiter der Figur 1 mit einer Rückenplatte des Aufsatzes nach Art einer Explosionsdarstellung,
- **Fig. 3:**: einen Ausschnitt aus der Darstellung der Figur 2 zum Darstellen des Anschlusses der Rückenplatte an ein Leiterprofil der Steigeleiter,
- **Fig. 4:**: die an die Steigeleiter montierte Rückenplatte des Aufsatzes zusammen mit einem Gehäuseteil als weiterer Teil des Aufsatzes nach Art einer Explosionsdarstellung,
- **Fig. 5:**: eine Detaildarstellung des Anschlusses des Gehäuseteils an die Steigeleiter,
- **Fig. 6:**: eine Kabelanlage gemäß einer weiteren Ausgestaltung der Erfindung mit einer freistehenden Steigeleiter, ausgerüstet mit einem feuerbeständigen Aufsatz zum Funktionserhalt im Brandfall nach Art einer Explosionsdarstellung und
- **Fig. 7:**: die Kabelanlage der Figur 6 mit dem fertig montierten Aufsatz.

Eine Kabelanlage 1 umfasst eine freistehende bzw. freihängende Steigeleiter 2. Die Steigeleiter 2 des dargestellten Ausführungsbeispiels besteht aus zwei randlichen Leiterprofilen 3, 3.1 und einer Vielzahl von die Leiterprofile 3, 3.1 verbindenden Sprossen 4. Die Leiterprofile 3, 3.1 sind bei dem dargestellten Ausführungsbeispiel als zueinander weisende, offene U-förmige Profile ausgeführt und verfügen über die für derartige Leiterprofile 3, 3.1 typische Lochung. An den Sprossen 4 sind Kabel 5 mit Klemmbefestigern, bei dem dargestellten Ausführungsbeispiel als Klemmschellen ausgeführt, gehalten. Über die Klemmbefestiger 6 wird auch das Gewicht der Kabel 5 in die Steigeleiter 2 eingeleitet.

Damit die Kabelanlage 1 den Anforderungen im Brandfall an einen Funktionserhalt genügt, sind an die Steigeleiter 2 in den vorgeschriebenen Abständen Aufsätze 7 angeschlossen, mit denen jeweils eine Sprosse 4 mit ihren Klemmbefestigern 6 gegenüber der äußeren Umgebung wärmeisoliert sind. Der Aufsatz 7 besteht aus einem feuerfesten bzw. feuerbeständigen Material. Der Aufsatz 7 ist nachfolgend im Detail beschrieben:

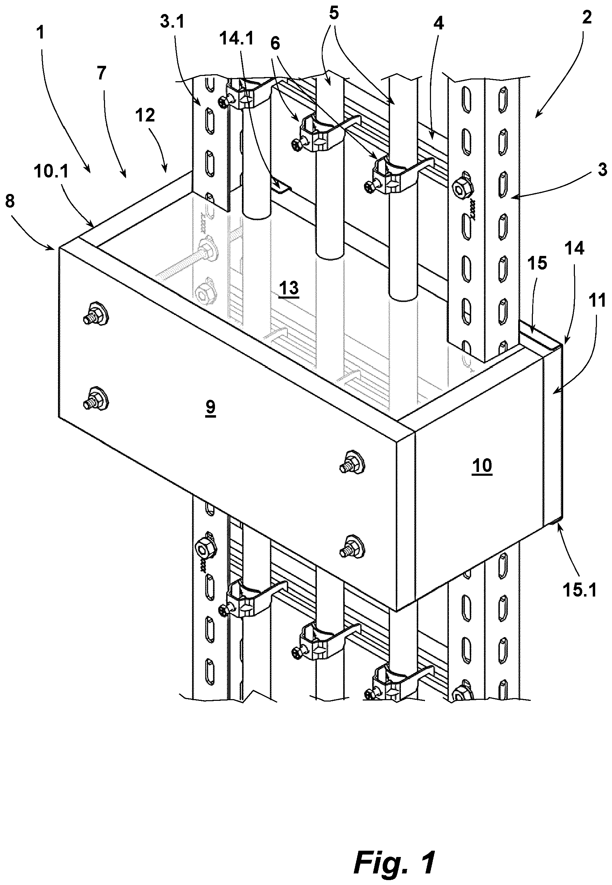

Der Aufsatz 7 verfügt über ein erstes Gehäuseteil 8 mit einer Vorderwand 9 und zwei Seitenwänden 10, 10.1 und über eine Rückenplatte 11 als zweites Gehäuseteil. Das Gehäuseteil 8 bzw. der von diesem eingefasste Hohlraum ist durch die Rückenplatte 11 rückseitig verschlossen, wobei durch dieses ein aus dem Gehäuseteil 8 und der Rückenplatte 11 gebildetes Gehäuse 12 die Steigeleiter 2 im Bereich der zu schützenden Sprosse 4 umfasst ist. Die Wände 9, 10, 10.1 des Gehäuseteils 8 und das Rückenteil 11 sind bei dem dargestellten Ausführungsbeispiel als feuerbeständige bzw. feuerfeste Platten ausgeführt. Der durch das Gehäuse 12 eingeschlossene Innenraum, in dem sich die zu schützende Sprosse 4 befindet, ist mit einem feuerbeständigen Material ausgefüllt, und zwar bei dem dargestellten Ausführungsbeispiel aus feuerbeständigen Schaumstoffblöcken und zum Ausfüllen der verbliebenen Hohlräume mit einem Brandschutzschaum. Diese Gehäusefüllung ist in Figur 1 mit dem Bezugszeichen 13 kenntlich gemacht.

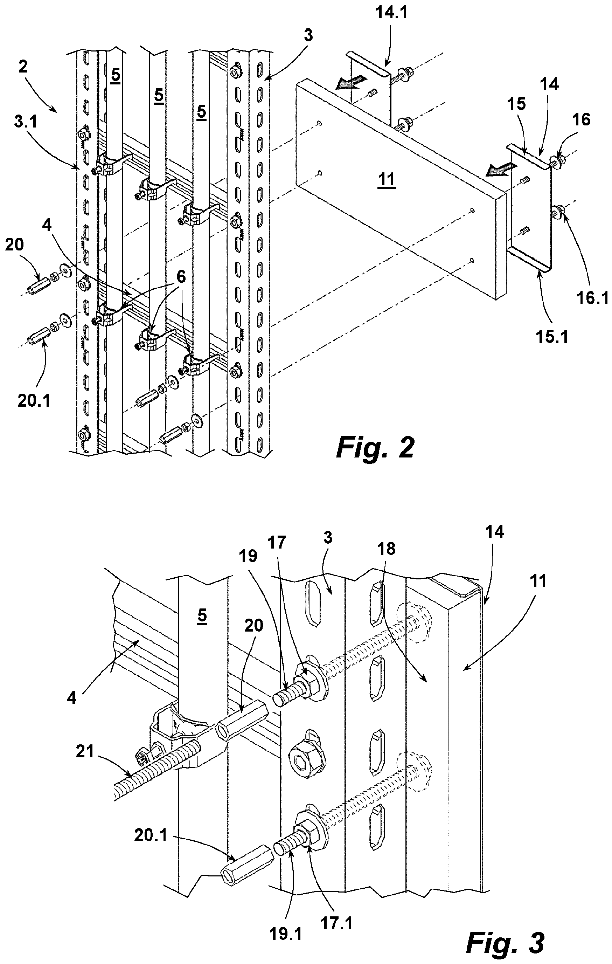

Die Rückenplatte 11 ist unter Verwendung von zwei Spannplatten 14, 14.1 an die Steigeleiter 2 bzw. ihre Leiterprofile 3, 3.1 angeschlossen. Die Spannplatten 14, 14.1 verfügen über einen oberen und einen unteren, aus seiner Ebene abgekanteten Schenkel 15, 15.1, die den oberen bzw. unteren Abschluss der Rückenplatte 11 übergreifen. Diese Schenkel 15, 15.1 sind der Übersicht halber in den Figuren nur zu der Spannplatte 14 kenntlich gemacht. Die Spannplatte 14.1 ist genauso aufgebaut. In die U-förmige Aufnahme der Spannplatten 14, 14.1 greift die Rückenplatte 11 ein (siehe auch Figur 1). Die Spannweite der Schenkel 15, 15.1 ist so ausgelegt, dass die darin eingreifende Rückenplatte 11 reibschlüssig darin eingreift, mithin die Spannplatten 14, 14.1 durch ihre Schenkel 15, 15.1 reibschlüssig an die Rückenplatte 11 angeschlossen sind. Die Rückenplatte 11 wird im Bereich ihrer beiden seitlichen Abschlüsse unter Verwendung von jeweils zwei Schraubbefestigern 16, 16.1 an jeweils ein Leiterprofil 3 bzw. 3.1 der Steigeleiter 2 angeschlossen. Die Schraubbefestiger 16, 16.1 durchgreifen die Spannplatte 14 und die Rückenplatte 11 sowie zwei mit vertikalem Abstand zueinander angeordnete Löcher des Leiterprofils 3, wie in der Detailansicht der Figur 3 erkennbar. Die Schraubbefestiger 16, 16.1 tragen unterhalb ihres Schraubenkopfes eine Beilagscheibe. Der Schaft der Schraubbefestiger 16, 16.1 ist als Gewindeschaft ausgeführt. Über ebenfalls mit Beilagscheiben abgestützte und auf den jeweiligen Gewindeschaft aufgeschraubte Spannmuttern 17, 17.1 ist die Rückenplatte 11 an die Steigeleiter 2 angeschlossen (siehe Figur 3). Durch die Spannmuttern 17, 17.1 wird über die anliegende spannkraftverteilende Spannplatte 14 die Rückenplatte 11 zum rückseitigen Abschluss des Leiterprofils 3 hin und gegen die Flachseite seines rückseitigen Schenkels gedrückt. Die Spannplatten 14, 14.1 erstrecken sich bis in den Bereich des seitlichen Abschlusses der Rückenplatte 11. Wie aus Figur 3 ersichtlich, wird durch die über die Außenseiten der Steigeleiter 2 hinausragenden Abschnitte eine Abstützfläche 18 für die freien Stirnseiten der Seitenwände 10, 10.1 des ersten Gehäuseteils 8 bereitgestellt.

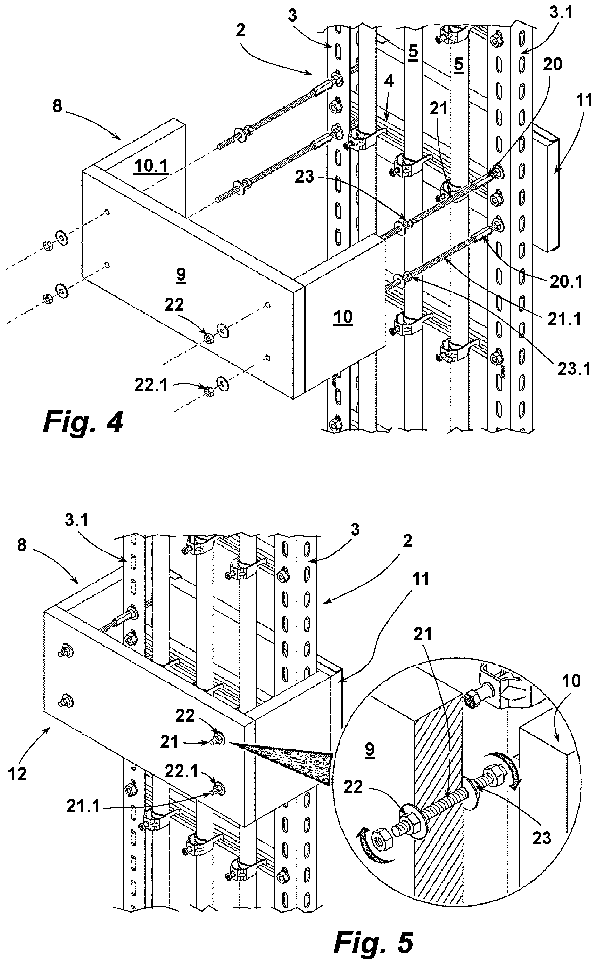

Zum Anschließen des Gehäuseteils 8 an die Steigeleiter 2 dienen wiederum Schraubbefestiger. Bei dem dargestellten Ausführungsbeispiel sind Schraubbefestiger 16, 16.1 mit einer Länge vorgesehen, damit mit diesen die Rückenplatte 11 an die Steigeleiter 2 angeschlossen werden kann. Der Gewindeabschnitt ist jedoch hinreichend lang, damit auf das freie Ende 19, 19.1 eine Verbindungsmuffe 20, 20.1 zur Verlängerung des Gewindeschaftes aufgeschraubt werden kann. Diese Verbindungsmuffen 20, 20.1 dienen zum Verlängern der Schraubbefestiger 17, 17.1 um jeweils eine Gewindestange 21, 21.1, an die das erste Gehäuseteil 8 angeschlossen wird. Die Gewindestangen 21, 21.1 durchgreifen zum Anschluss des Gehäuseteils 8 an die Steigeleiter 2 dessen Vorderwand (siehe auch Figur 4). Fixiert wird dieses Gehäuseteil 8 mit den Gewindestangen 21, 21.1 mittels beilagscheibenunterlegten Spannmuttern 22, 22.1, die von der Außenseite der Vorderwand 9 auf den herausragenden Abschnitt einer Gewindestange 21, 21.1 aufgeschraubt werden. Die Gewindestangen 21, 21.1 tragen innenseitig bezüglich des Gehäuseteils 8 einen durch eine Anschlagmutter 23, 23.1, ebenfalls beilagscheibenunterlegt, bereitgestellten Anschlag, gegen den die Spannmuttern 22, 22.1 verschraubt bzw. verspannt werden. Auf diese Weise wird die über die freien Stirnflächen der Seitenwände 10, 10.1 auf die Vorderseite der Rückenplatte 11 wirkende Spannkraft kontrolliert. Eine gewisse Anpresskraft ist erwünscht, um das Gehäuse 12 umlaufend dicht zu haben. Allerdings darf diese nicht zu groß sein, damit kein Material aus den Seitenwänden 10, 10.1 und/oder der Rückenplatte 11 herausbricht. Insofern sind die Anschlagmuttern 23, 23.1 hinsichtlich ihrer Position auf der jeweiligen Gewindestange 21, 21.1 vor der Montage des Gehäuseteils 8 entsprechend einzurichten.

Das an die Steigeleiter 2 bzw. ihre Leiterprofile 3, 3.1 angeschlossene Gehäuse 12 mit seinem Gehäuseteil 8 und seiner Rückenplatte 11 ist in Figur 5 gezeigt. Deutlich erkennbar ist das vorderseitige Herausragen der freien Enden der Gewindestangen 21, 21.1, auf die die Spannmuttern 22, 22.1 aufgeschraubt sind. Die Detaildarstellung der Figur 5 zeigt die Verbindungsanordnung zwischen der Vorderwand 9 des Gehäuseteils 8 und der Gewindestange 21 mit der Abstützung der Vorderwand 9 an der Beilagscheibe der Anschlagmutter 23.

In einem nachfolgenden Schritt wird der verbliebene Hohlraum innerhalb des Gehäuses 12 in der bereits vorbeschriebenen Art und Weise verfüllt. Dann ist der Aufsatz 7, wie in Figur 1 gezeigt, fertiggestellt. Durch den Aufsatz 7 ist die darin integrierte Sprosse 4 mit ihren Klemmbefestigern 6 wirksam gegenüber eine Temperatureinwirkung im Brandfalle zumindest für die für den Funktionserhalt erforderliche Zeitdauer geschützt. Infolgedessen bleibt die kabeltragende Funktion dieser Klemmbefestiger 6 innerhalb des Aufsatzes 7 erhalten.

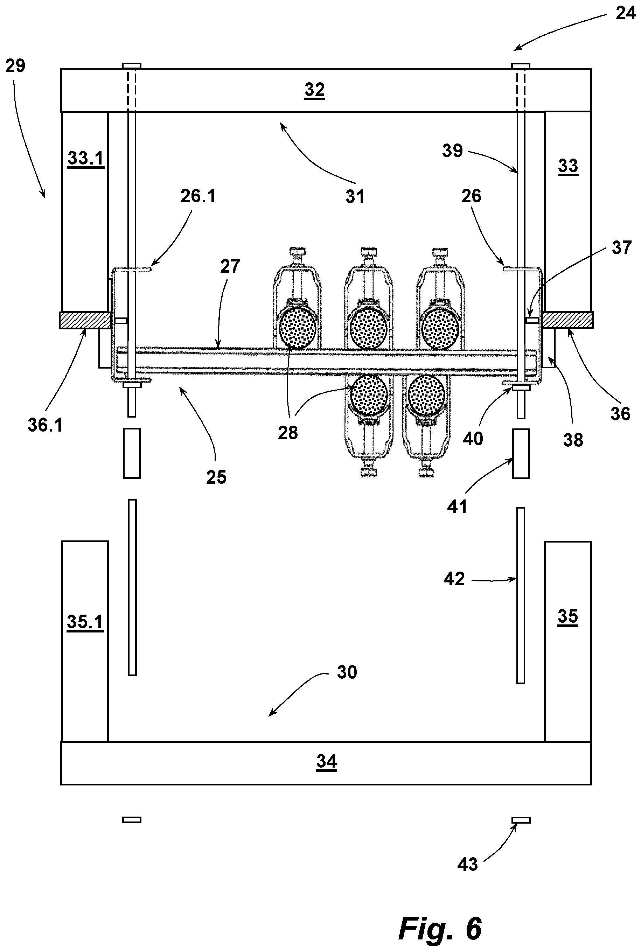

Figur 6 zeigt eine weitere Kabelanlage 24 mit einer Steigeleiter 25, deren Leiterprofile 26, 26.1 mit Sprossen 27 verbunden sind. Die Steigeleiter 25 unterscheidet sich von der Steigeleiter 2 dadurch, dass ihre Sprossen 27 beidseitig mit Kabeln 28 belegt sind. Die Kabel 28 sind ebenso wie bei der Kabelanlage 1 mit Klemmbefestigern an die Sprossen 27 angeschlossen, sodass das Gewicht der Kabel 28 über die Steigeleiter 25 aufgefangen wird. Für den Funktionserhalt im Brandfall dient wiederum ein Aufsatz 29. Dieser verfügt über ein erstes Gehäuseteil 30. Dieses Gehäuseteil 30 entspricht dem Gehäuseteil 8 der zuvor anhand der Figuren 1 bis 5 beschriebenen Ausgestaltung. Daher gelten die diesbezüglichen Ausführungen auch für das Gehäuseteil 30. Der Aufsatz 29 unterscheidet sich von dem Aufsatz 7 dadurch, dass das zweite Gehäuseteil - das Gehäuseteil 31 - genauso aufgebaut ist wie das Gehäuseteil 30 und somit in einer Draufsicht von oben U-förmig. Das zweite Gehäuseteil 31 verfügt damit über eine Rückwand 32 und zwei Seitenwände 33, 33.1. Bei dem ersten Gehäuseteil 30 sind die Vorderwand mit dem Bezugszeichen 34 und seine beide Seitenwände mit den Bezugszeichen 35, 35.1 kenntlich gemacht. An die Leiterprofile 26, 26.1 ist von ihrem die beiden Schenkel verbindenden Steg nach außen abragend jeweils ein Stützprofil 36, 36.1 angeordnet. Das im Folgenden näher beschriebene Stützprofil 36 ist mittels zweier in Längserstreckung des Leiterprofils 26 mit Abstand zueinander angeordneten Haken in die entsprechende Lochung in das Leiterprofil 26 eingehängt. Das Stützprofil 36 trägt unterseitig und oberseitig eine Kippsicherung 38, von der in Figur 6 nur die untere Kippsicherung erkennbar ist, da das Stützprofil 36 im Schnitt gezeigt ist. Die Kippsicherung stützt sich an der Außenseite des die Schenkel verbindenden Steges des Leiterprofils 26 ab, um ein Verkippen in Richtung zum ersten oder zweiten Gehäuseteil 30 bzw. 31 hin zu vermeiden. Aus diesem Grunde kann auf die Flachseite des Stützprofils 36 eine Kraft einwirken, ohne dass sich dieses verstellt, jedenfalls nicht nennenswert verstellt.

Das Stützprofil 36.1 ist genauso aufgebaut und in der gleichen Weise an das Leiterprofil 26.1 angeschlossen, wie dieses vorstehend zu dem Stützprofil 36 beschrieben ist.

Befestigt ist das zweite Gehäuseteil 31 bei dem dargestellten Ausführungsbeispiel wiederum mit einem Schraubbefestigerpaar an jedes Leiterprofil 26, 26.1. In der Figur ist der obere Schraubbefestiger, mit dem das zweite Gehäuseteil 31 an das Leiterprofil 26 angeschlossen ist, mit dem Bezugszeichen 39 kenntlich gemacht. Die folgenden Ausführungen gelten gleichermaßen für die anderen in der Figur nicht gezeigten bzw. nicht mit Bezugszeichen kenntlich gemachten Schraubbefestiger zum Anschließen des zweiten Gehäuseteils 31 an die Steigeleiter 25. Der Schraubbefestiger 39 wirkt mit seinem Schraubenkopf auf die Außenseite der Rückwand 32 des zweiten Gehäuseteils 31. Typischerweise befindet sich unter dem Schraubenkopf eine Beilagscheibe (nicht gezeigt). Der Gewindeschaft erstreckt sich durch die beiden Schenkel des Leiterprofils 26. Auf das freie Ende des Gewindeschaftes des Schraubbefestigers 39 ist eine Spannmutter 40, typischerweise beilagscheibenunterstützt, aufgeschraubt. Die Spannmutter 40 stützt sich an der Außenseite des von dem zweiten Gehäuseteil 31 entfernteren Schenkels des Leiterprofils 26 ab. Diese Abstützanordnung ist dieselbe, wie sie zu der Ausgestaltung gemäß der Figuren 1 bis 5 beschrieben ist. Durch die vier Schraubbefestiger 39, mit denen das zweite Gehäuseteil 31 an den Leiterprofilen 26, 26.1 angeschlossen ist, werden die freien Stirnflächen der Seitenwände 33, 33.1 des zweiten Gehäuseteils 31 gegen die eine Flachseite der Stützprofile 36, 36.1 gedrückt. Auf diese Weise ist das zweite Gehäuseteil 31 mechanisch an die Steigeleiter 25 angeschlossen.

Das erste Gehäuseteil 30 wird an die Schraubbefestiger 39 in der gleichen Weise angeschlossen, wie dieses zu der Ausgestaltung der Kabelanlage 1 der Figuren 1 bis 5 bezüglich des ersten Gehäuseteils 8 erläutert ist. Eine Verbindungsmuffe 41 dient zum Anschließen einer Gewindestange 42, die wiederum vorderseitig aus der Vorderwand 34 des ersten Gehäuseteils 30 herausragt. Eine Spannmutter 43 dient zum Verspannen des ersten Gehäuseteils 30, sodass die freien Stirnflächen seiner Seitenwände 35, 35.1 auf die andere Flachseite gegen die Stützprofile 36, 36.1 wirken.

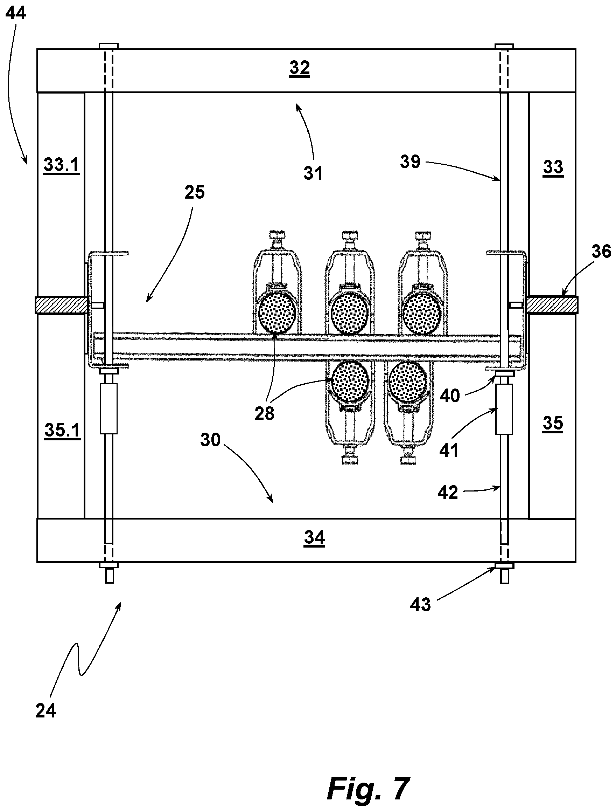

Ist durch die beiden Gehäuseteile 30, 31 das Gehäuse 44, wie in Figur 7 gezeigt, montiert, durch welches Gehäuse 44 die Sprosse 27 zusammen mit ihren die Kabel 28 haltenden Klemmbefestigern umfänglich eingefasst ist, wird der Gehäuseinnenraum mit feuerfestem Material verfüllt, typischerweise mit brandbeständigen Schaumblöcken und Brandschutzschaum zum Verfüllen der verbliebenen Hohlräume.

Bei den beschriebenen Ausführungsbeispielen erstrecken sich die Steigeleitern in vertikaler Richtung. Dieselben Vorteile stellen sich ebenfalls ein, wenn diese gegenüber der Vertikalen geneigt ist.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass dies im Rahmen dieser Ausführungen näher beschrieben werden müsste.

### Bezugszeichenliste

| | | | |
|---|---|---|---|
| 1 | Kabelanlage | 31 | zweites Gehäuseteil |
| 2 | Steigeleiter | 32 | Rückwand |
| 3, 3.1 | Leiterprofil | 33, 33.1 | Seitenwand |
| 4 | Sprosse | 34 | Vorderwand |
| 5 | Kabel | 35, 35.1 | Seitenwand |
| 6 | Klemmbefestiger | 36, 36.1 | Stützprofil |
| 7 | Aufsatz | 37 | Haken |
| 8 | Gehäuseteil | 38 | Kippsicherung |
| 9 | Vorderwand | 39 | Schraubbefestiger |
| 10, 10.1 | Seitenwand | 40 | Spannmutter |
| 11 | Rückenplatte | 41 | Verbindungsmuffe |
| 12 | Gehäuse | 42 | Gewindestange |
| 13 | Gehäusefüllung | 43 | Spannmutter |
| 14, 14.1 | Spannplatte | 44 | Gehäuse |
| 15, 15.1 | Schenkel | | |
| 16, 16.1 | Schraube | | |
| 17, 17.1 | Spannmutter | | |
| 18 | Abschnittsfläche | | |
| 19, 19.1 | freies Ende | | |
| 20, 20.1 | Verbindungsmuffe | | |
| 21, 21.1 | Gewindestange | | |
| 22, 22.1 | Spannmutter | | |
| 23, 23.1 | Anschlagmutter | | |
| 24 | Kabelanlage | | |
| 25 | Steigeleiter | | |
| 26, 26.1 | Leiterprofil | | |
| 27 | Sprosse | | |
| 28 | Kabel | | |
| 29 | Aufsatz | | |
| 30 | erstes Gehäuseteil | | |

## Patentansprüche

1. Kabelanlage mit Funktionserhalt im Brandfall, umfassend eine Steigeleiter (2) für den vertikalen oder geneigten Einsatz mit zwei durch Sprossen (4) miteinander verbundenen Leiterprofilen (3, 3.1) und an den Sprossen (4) mittels Klemmbefestigern (6) gehaltenen Kabeln (5), wobei zumindest eine Klemmbefestiger (6) tragende Sprosse (4) der Steigeleiter (2) mit ihren Klemmbefestigern (6) durch einen feuerbeständigen, wärmeisolierenden Aufsatz (7) gegenüber der äußeren Umgebung im Brandfalle isoliert sind, welcher Aufsatz (7) ein aus feuerfestem bzw. feuerbeständigem Material hergestelltes erstes Gehäuseteil (8) mit einer Vorderwand und mit zwei Seitenwänden (10, 10.1) sowie eine feuerfeste Gehäusefüllung (13) zum Auskleiden des Gehäuseteilhohlraums aufweist, wobei der Aufsatz (7) ein zweites Gehäuseteil in Form einer Rückenplatte (11) zum rückseitigen Verschließen des ersten Gehäuseteils (8), deren Breite zumindest der Spannweite der Seitenwände (10, 10.1) zum Bereitstellen einer Abstützfläche für die Stirnflächen der Seitenwände (10, 10.1) entspricht, sowie im Bereich des seitlichen Randbereiches der Rückenplatte (11) außenseitig zu dieser angeordnete Spannplatten (14, 14.1) und ferner Befestiger (17, 19) zum Anschließen der Rückenplatte (11) an die Steigeleiter (2) sowie Befestigungsmittel (20, 21, 22) zum Anschließen des ersten Gehäuseteils (8) an die Steigeleiter (2) zum Halten desselben mit den auf der Vorderseite der Rückenplatte (11) abgestützten Stirnflächen seiner Seitenwände (10, 10.1) umfasst, so dass beide Gehäuseteile (8, 11) an der Steigeleiter (2) abgestützt sind.

2. Kabelanlage mit Funktionserhalt im Brandfall, umfassend eine Steigeleiter (25) für den vertikalen oder geneigten Einsatz mit zwei durch Sprossen (27) miteinander verbundenen Leiterprofilen (26, 26.1) und an den Sprossen (27) mittels Klemmbefestigern gehaltenen Kabeln (28), wobei zumindest eine Klemmbefestiger tragende Sprosse (27) der Steigeleiter (25) mit ihren Klemmbefestigern durch einen feuerbeständigen, wärmeisolierenden Aufsatz (29) gegenüber der äußeren Umgebung im Brandfalle isoliert sind, welcher Aufsatz (29) ein aus feuerfestem bzw. feuerbeständigem Material hergestelltes erstes Gehäuseteil (30) mit einer Vorderwand (34) und mit zwei Seitenwänden (35, 35.1) sowie eine feuerfeste Gehäusefüllung zum Auskleiden des Gehäuseteilhohlraums aufweist, wobei der Aufsatz (29) ein zweites Gehäuseteil (31) mit einer Rückwand (32) und zwei Seitenwänden (33, 33.1) zum rückseitigen Verschließen des ersten Gehäuseteils (30), wobei die Spannweite des ersten und zweiten Gehäuseteils (30, 31) bezüglich des Abstandes ihrer Seitenwände (33, 33.1; 35, 35.1) gleich oder im Wesentlichen gleich ist, sowie ein an jedes Leiterprofil (26, 26.1) angeschlossenes, in Querrichtung nach außen davon abragendes Stützprofil (36, 36.1) für die Anlage der Stirnflächen der Seitenwände (33, 33.1; 35, 35.1) der beiden Gehäuseteile (30, 31) und ferner Befestiger (39 - 43) zum Anschließen der beiden Gehäuseteile (30, 31) an die Steigeleiter (25) zum Halten derselben mit den auf den Stützprofilen (36, 36.1) abgestützten Stirnflächen der Seitenwände (33, 33.1; 35, 35.1) der Gehäuseteile (30, 31) umfasst.

3. Kabelanlage nach Anspruch 1 oder 2, **dadurch gekennzeichnet, dass** das zweite Gehäuseteil (11, 31) an den Leiterprofilen (3, 3.1; 26, 26.1) mit Schraubbefestigern (21, 39) und darauf aufgeschraubten, an den Leiterprofilen (3, 3.1; 26, 26.1) abgestützten Spannmuttern (17, 40) festgelegt ist.

4. Kabelanlage nach Anspruch 3, **dadurch gekennzeichnet, dass** die Schraubbefestiger (21, 39) mit ihrem Schaft aus der Vorderwand des ersten Gehäuseteils (8, 30) herausgeführt sind und dieses Gehäuseteil (8,30) durch diese Schraubbefestiger (21, 39) und außenseitig zu der Vorderwand aufgeschraubte Muttern an die Steigeleiter (2, 25) angeschlossen ist

5. Kabelanlage nach Anspruch 3, **dadurch gekennzeichnet, dass** der Schaft der Schraubbefestiger (21, 39) jeweils mit einer Verbindungsmuffe (20, 40) und einer darin verschraubten Gewindestange (21, 42) verlängert ist und die auf diese Weise verlängerten Schäfte der Schraubbefestiger (21, 39) aus der Vorderwand (9, 34) des ersten Gehäuseteils (8, 30) herausgeführt sind und dieses Gehäuseteil (8, 30) durch diese Schraubbefestiger (21, 39) und außenseitig zu der Vorderwand (9, 34) darauf aufgeschraubte Spannmuttern (22, 22.1; 43) an die Steigeleiter 225) angeschlossen ist.

6. Kabelanlage nach Anspruch 4 oder 5, jeweils in Rückbezug auf den Anspruch 1, **dadurch gekennzeichnet, dass** zur Innenabstützung der Vorderwand (9) des ersten Gehäuseteils (8) der jeweilige Gewindeschaft (21) ein Anschlagmittel (23) aufweist, gegen das die Vorderwand (9) durch die außenseitige Mutter (22, 22.1) verspannt ist.

7. Kabelanlage nach Anspruch 6, **dadurch gekennzeichnet, dass** das Anschlagmittel durch eine Mutter (23) als Widerlager bereitgestellt ist.

8. Kabelanlage nach einem der Ansprüche 1 oder 3 bis 7, jeweils in Rückbezug auf den Anspruch 1, **dadurch gekennzeichnet, dass** die Spannplatten (14, 14.1) jeweils einen aus ihrer Ebene abgekanteten oberen und unteren, die Oberseite bzw. die Unterseite der Rückenplatte (11) übergreifenden Halteschenkel (15, 15.1) aufweist.

9. Kabelanlage nach Anspruch 1 oder 3 bis 8, jeweils in Rückbezug auf den Anspruch 1, **dadurch gekennzeichnet, dass** die Spannplatten (14, 14.1) durch eine Brücke miteinander verbunden sind.

10. Kabelanlage nach Anspruch 2 oder einem der Ansprüche 3 bis 9, jeweils in Rückbezug auf den Anspruch 2, **dadurch gekennzeichnet, dass** die Stützprofile (36, 36.1) in eine Lochung der Leiterprofile (26, 26.1) eingehängt sind.

11. Kabelanlage nach Anspruch 2 oder einem der Ansprüche 3 bis 10, jeweils in Rückbezug auf den Anspruch 2, **dadurch gekennzeichnet, dass** die Stützprofile (36, 36.1) gegenüber einem Verkippen in Richtung zum ersten bzw. zum zweiten Gehäuseteil (30, 31) hin an dem jeweiligen Leiterprofil (26, 26.1) abgestützt sind.

12. Kabelanlage nach einem der Ansprüche 1 bis 11, **dadurch gekennzeichnet, dass** die Gehäuseteile (8, 11; 30, 31) aus feuerfestem bzw. feuerbeständigem Material hergestellt sind.

13. Kabelanlage nach einem der Ansprüche 1 bis 12, **dadurch gekennzeichnet, dass** die Gehäusefüllung (13) des Aufsatzes durch ein oder mehrere feuerbeständige Schaumstoffblöcke und/oder durch einen Brandschutzschaum bereitgestellt ist.

## Claims

1. Cable installation which remains functional in the event of fire, comprising a ladder (2) for vertical or inclined usage, with two ladder profiles (3, 3.1) connected to one another by rungs (4), and cables (5) held to the rungs (4) by means of cable securing elements (6), wherein at least one rung (4) of the ladder (2), carrying cable securing elements (6), is isolated with its cable securing elements (6) by means of a fire-resistant heat-insulating mounting (7) against the outside environment in the event of fire, this mounting (7) comprising a first housing part (8), made of fireproof or fire-resistant material, with a front wall and with two side walls (10, 10.1), and a fireproof housing filling (13) to provide cladding for the housing cavity, wherein the mounting (7) comprises a second housing part in the form of a back plate (11), for closing the first housing part (8) at the rear, the width of which corresponds at least to the span width of the side walls (10, 10.1), in order to provide a support surface for the face surfaces of the side walls (10, 10.1), as well as tensioning plates (14, 14.1) assigned to it and arranged on its outside in the region of the lateral edge region of the back plate (11), and also securing elements (17, 19) for connecting the back plate (11) to the ladder (2), as well as securing means (20, 21, 22) for connecting the first housing part (8) to the ladder (2) in order to hold it with the face surfaces of its side walls (10, 10.1) supported on the front side of the back plate (11), such that both housing parts (8, 11) are supported on the ladder (2).

2. Cable installation which remains functional in the event of fire, comprising a ladder (25) for vertical or inclined usage, with two ladder profiles (26, 26.1) connected to one another by rungs (27), and cables (28) held to the rungs (27) by means of cable securing elements, wherein at least one rung (27) of the ladder (25), carrying cable securing elements, is isolated with its cable securing elements by means of a fire-resistant heat-insulating mounting (29) against the outside environment in the event of fire, this mounting (29) comprising a first housing part (30), made of fireproof or fire-resistant material, with a front wall (34) and with two side walls (35, 35.1), and a fireproof housing filling to provide cladding for the housing cavity, wherein the mounting (29) comprises a second housing part (31) with a rear wall (32) and two side walls (33, 33.1), for closing the first housing part (30) at the rear, wherein the span width of the first and second housing parts (30, 31) is the same or essentially the same in relation to the distance interval between its side walls (33, 33.1; 35, 35.1), as well as a support profile (36, 36.1) connected to each ladder profile (26, 26.1), projecting outwards in a transverse direction, for bringing into contact the face surfaces of the side walls (33, 33.1, 35, 35.1) of the two housing parts (30, 31), and also securing elements (39-43) for connecting the two housing parts (30, 31) to the ladder (25), in order to hold it with the face surfaces of the side walls (33, 33.1; 35, 35.1), supported on the support profiles (36, 36.1), of the housing parts (30, 31).

3. Cable installation according to claim 1 or 2, **characterized in that** the second housing part (11, 31) is secured to the ladder profiles (3, 3.1; 26, 26.1) by means of screw securing elements (21, 39) and clamping nuts (17, 40) screwed onto them, supported on the ladder profiles (3, 3.1; 26, 26.1).

4. Cable installation according to claim 3, **characterized in that** the screw securing elements (21, 39) are guided with their shafts out of the front wall of the first housing part (8, 30), and this housing part (8, 30) is connected to the ladder (2, 25) by means of these screw securing elements (21, 39) and on the outside by nuts screwed onto the front wall.

5. Cable installation according to claim 3, **characterized in that** the shafts of the screw securing elements (21, 39) are extended in each case by a connecting sleeve (20, 40) and a threaded rod (21, 42) screwed into the sleeve, and the shafts of the screw securing elements (21, 39) extended in this way are guided out of the front wall (9, 34) of the first housing part (8, 30), and this housing part (8, 30) is connected to the ladder (25) by means of these screw securing elements (21, 39), and connected on the outside to the front wall (9, 34) by clamping nuts (22, 22.1; 43) screwed onto the front wall.

6. Cable installation according to claim 4 or 5, **characterized in that,** in order to provide inside support for the front wall (9) of the first housing (8), the respective threaded shafts (21) comprise a contact stop means (23), against which the front wall (9) is tensioned by means of the outside nuts (22, 22.1).

7. Cable installation according to claim 6, **characterized in that** the contact stop means is provided by a nut (23) as an abutment element.

8. Cable installation according to any one of claims 1 or 3 to 7, in each case by reference to claim 1, **characterized in that** the tensioning plates (14, 14.1) each comprise an upper and lower retaining limb (15, 15.1), inclined out of their plane and engaging over the upper side and lower side respectively of the back plate (11).

9. Cable installation according to claim 1 or 3 to 8, in each case by reference to claim 1, **characterized in that** the clamping plates (14, 14.1) are connected to each other by a bridge.

10. Cable installation according to claim 2 or any one of claims 3 to 9, in each case by reference to claim 2, **characterized in that** the support profiles (36, 36.1) are suspended into a perforation in the ladder profiles (26, 26.1).

11. Cable installation according to claim 2 or any one of claims 3 to 10, in each case by reference to claim 2, **characterized in that** the support profiles (36, 36.1) are supported at the respective ladder profile (26, 26.1) against tilting in the direction towards the first or second housing parts (30, 31).

12. Cable installation according to any one of claims 1 to 11, **characterized in that** the housing parts (8, 11; 30, 31) are made of fireproof or fire-resistant material.

13. Cable installation according to any one of claims 1 to 12, **characterized in that** the housing filling (13) of the mounting is provided by one or more fire-resistant foam material blocks and/or by a fire protection foam.

## Revendications

1. Installation de câblage apte à fonctionner en cas d'incendie, comprenant une échelle à câbles (2) prévue pour une utilisation verticale ou inclinée avec deux profilés d'échelle (3, 3.1) reliés l'un avec l'autre par des barreaux (4) et avec des câbles (5) maintenus sur les barreaux (4) à l'aide de brides de fixation (6), au moins un barreau (4) supportant des brides de fixation (6) de l'échelle à câbles (2) étant, avec ses brides de fixation (6), isolé en cas d'incendie par rapport à l'environnement extérieur par un capot (7) résistant au feu et isolé de la chaleur, lequel capot (7) présentant un premier élément de boîtier (8) fabriqué dans un matériau résistant au feu ou ignifuge, avec une paroi avant et deux parois latérales (10, 10.1) ainsi qu'une garniture (13) résistante au feu destinée à garnir l'espace creux de l'élément de boîtier, lequel capot (7) comprend un second élément de boîtier sous la forme d'une plaque arrière (11) assurant la fermeture arrière du premier élément de boîtier (8), dont la largeur correspond au moins à l'entraxe des parois latérales (10, 10.1) afin de mettre à disposition une surface d'appui pour les faces frontales des parois latérales (10, 10.1), et qui comprend des plaques de serrage (14, 14.1) disposées au niveau de la zone périphérique latérale de la plaque arrière (11), sur la face extérieure de cette dernière, ainsi que des fixations (17, 19) pour solidariser la plaque arrière (11) sur l'échelle à câbles (2) ainsi que des moyens de fixation (20, 21, 22) pour solidariser le premier élément de boîtier (8) sur l'échelle à câbles (2) afin d'assembler celui-ci avec les faces frontales de ses parois latérales (10, 10.1) en appui sur la face avant de la plaque arrière (11), de sorte que les deux éléments de boîtier (8, 11) sont en appui sur l'échelle à câbles (2).

2. Installation de câblage apte à fonctionner en cas d'incendie comprenant une échelle à câbles (25) prévue pour une utilisation verticale ou inclinée avec deux profilés d'échelle (26, 26.1) reliés l'un avec l'autre par des barreaux (27) et avec des câbles (28) maintenus sur les barreaux (27) à l'aide de brides de fixation, au moins un barreau (27) supportant des brides de fixation de l'échelle à câbles (25) étant, avec ses brides de fixation (6), isolé en cas d'incendie par rapport à l'environnement extérieur par un capot (29) résistant au feu et isolé de la chaleur, lequel capot (29) présentant un premier élément de boîtier (30) fabriqué dans un matériau résistant au feu ou ignifuge, avec une paroi avant (34) et deux parois latérales (35, 35.1) ainsi qu'une garniture résistante au feu destinée à garnir l'espace creux de l'élément de boîtier, lequel capot (29) comprend un second élément de boîtier (31) avec une paroi arrière (32) et deux parois latérales (33, 33.1) assurant la fermeture arrière du premier élément de boîtier (30), l'entraxe entre le premier et second élément de boîtier (30, 31), par rapport à la distance entre leurs parois latérales (33, 33.1 ; 35, 35.1) étant identique ou sensiblement identique, et comprenant un profilé d'appui (36, 36.1) solidarisé sur chaque profilé d'échelle (26, 26.1), en saillie vers l'extérieur, perpendiculairement par rapport à ce dernier, pour recevoir les faces frontales des parois latérales (33, 33.1 ; 35, 35.1) des deux éléments de boîtier (30, 31) et comprenant par ailleurs des fixations (39 à 43) pour solidariser les deux éléments de boîtier (30, 31) sur l'échelle à câbles (25), pour maintenir ces derniers par les faces frontales des parois latérales (33, 33.1 ; 35, 35.1) des éléments de boîtier (30, 31), en appui sur les profilés d'appui (36, 36.1).

3. Installation de câblage selon la revendication 1 ou 2, **caractérisée en ce que** le second élément de boîtier (11, 31) est fixé sur les profilés d'échelle (3, 3.1, 26, 26.1) avec des fixations vissées (21, 39) et avec des écrous de serrage (17, 40) vissés sur ces dernières, en appui sur les profilés d'échelle (3, 3.1 ; 26, 26.1).

4. Installation de câblage selon la revendication 3, **caractérisée en ce que** les fixations vissées (21, 39), avec leur fût traversent la paroi avant du premier élément de boîtier (8, 30) et que cet élément de boîtier (8, 30) est raccordé à l'échelle à câbles (2, 25) par ces fixations vissées (21, 39) et par des écrous vissés à l'extérieur sur la paroi avant.

5. Installation de câblage selon la revendication 3, **caractérisée en ce que** le fût des fixations vissées (21, 39), est respectivement prolongé par un manchon de raccordement (20, 40) et une tige fileté (21, 42) vissée dans ce dernier et que les fûts des fixations vissées (21, 39) prolongés de cette manière traversent la paroi avant (9, 34) du premier élément de boîtier (8, 30) et que cet élément de boîtier (8, 30) est raccordé sur l'échelle à câbles (2, 25) par ces fixations vissées (21, 39) et par des écrous (22, 22.1 ; 43) vissés sur ces dernières à l'extérieur de la paroi avant (9, 34)

6. Installation de câblage selon la revendication 4 ou 5, en se référant à la revendication 1, **caractérisée en ce que,** pour supporter par l'intérieur la paroi avant (9) du premier élément de boîtier (8), la tige filetée (21) en question présente une butée (23) contre laquelle la paroi avant (9) est serrée sur l'écrou (22, 22.1) à l'extérieur.

7. Installation de câblage selon la revendication 6, **caractérisé en ce que** la butée (23) est mise à disposition par un écrou (23) faisant office de contre-butée.

8. Installation de câblage selon l'une des revendications 1 ou 3 à 7, en se référant respectivement à la revendication 1, **caractérisée en ce que** les plaques de serrage (14, 14.1) présentent respectivement un montant de maintien (15, 15.1) supérieur et inférieur réalisé par pliage à partir de leur plan qui déborde sur la face supérieure ou inférieure de la plaque arrière (11).

9. Installation de câblage selon la revendication 1 ou 3 à 8, en se référant respectivement à la revendication 1, **caractérisée en ce que** les plaques de serrage (14, 14.1) sont reliées entre elle par un pont.

10. Installation de câblage selon la revendication 2 ou selon l'une quelconque des revendications 3 à 9, en se référant respectivement à la revendication 2, **caractérisée en ce que** les profilés d'appui (36, 36.1) sont accroché dans une perforation des profilés d'échelle (26, 26.1).

11. Installation de câblage selon la revendication 2 ou selon l'une des revendications 3 à 10, en se référant respectivement à la revendication 2, **caractérisée en ce que** les profilés d'appui (36, 36.1) sont en appui sur le profilé d'échelle (26, 26.1) en question pour contrer un basculement en direction du premier ou du second élément de boîtier (30, 31).

12. Installation de câblage selon l'une des revendications 1 à 11, **caractérisée en ce que** les éléments de boîtier (8, 11 ; 30, 31) sont fabriqués dans un matériau résistant au feu ou ignifuge.

13. Installation de câblage selon l'une des revendications 1 à 12, **caractérisée en ce que** la garniture (13) est mis à disposition par un ou plusieurs blocs de mousse ignifuge et/ou par une mousse coupe-feu.
